# EUROPÄISCHE PATENTSCHRIFT

(11) **EP 3 814 855 B1**
(45) Veröffentlichungstag und Bekanntmachung des Hinweises auf die Patenterteilung: **23.11.2022**
(21) Anmeldenummer: 19731724.1
(22) Anmeldetag: 18.06.2019
(51) Int. Cl.: G05B 19/042, B65G 43/10

(54) **ANALOG GESTEUERTE FÖRDERVORRICHTUNG MIT DATENAUSLESUNG**
ANALOG-CONTROLLED TRANSPORT DEVICE WITH DATA READ-OUT
DISPOSITIF DE TRANSPORT À COMMANDE ANALOGIQUE À LECTURE DE DONNÉES

(30) Priorität: 29.06.2018 DE 102018005149
(43) Veröffentlichungstag der Anmeldung: 05.05.2021
(73) Patentinhaber: Interroll Holding AG, 6592 Sant' Antonino (CH)
(72) Erfinder: HAMPE, Andreas, 6592 Sant' ANTONINO (CH); HENZE, Herbert, 6592 Sant' ANTONINO (CH)
(74) Vertreter: Kohlhof, Stephan
(86) Internationale Anmeldenummer: PCT/EP2019/065971
(87) Internationale Veröffentlichungsnummer: WO 2020/002043

(56) Entgegenhaltungen:
- DE-A1-102014 101 672
- TW-A- 200 910 098
- US-A- 4 497 019
- US-A1- 2008 141 271
- US-B2- 7 535 279

## Beschreibung

Die Erfindung betrifft eine Fördervorrichtung mit einer Antriebseinheit, einer zur Analogsignalübertragung ausgebildeten Anschlussschnittstelle und einem mit der Antriebseinheit und der Anschlussschnittstelle signaltechnisch gekoppelten Antriebssteuerungsmodul. Ein weiterer Aspekt der Erfindung ist eine Diagnoseeinrichtung für eine Fördervorrichtung mit einer motorbetriebenen Förderrolle, umfassend eine elektronische Diagnoseeinheit mit einer Steuerungsdatenschnittstelle. Ferner betrifft die Erfindung ein Verfahren zum Ausgeben und ein Verfahren zum Auslesen von Konfigurationsdaten aus einer analog gesteuerten Fördervorrichtung. Schließlich betrifft die Erfindung ein Verfahren zum Programmieren einer analog gesteuerten Fördervorrichtung.

Fördervorrichtungen der eingangs genannten Art werden in der Intralogistik für unterschiedliche Zwecke in voll- und teilautomatisierten Logistikprozessen eingesetzt. So können sie beispielsweise zu Förderung von Fördergut, insbesondere Paletten, Kisten, Koffer, Postsendungen oder dergleichen eingesetzt werden. Solche Fördervorrichtungen können beispielsweise in einer motorbetriebenen Förderrolle oder als eine motorbetriebene Förderrolle realisiert sein.

In Förderstrecken größerer Förderanlagen werden Förderrollen vorzugsweise in Reihe hintereinander in einem Förderrahmengestell angeordnet und drehbar darin gelagert, um das Fördergut über die Förderstrecke zu transportieren. Eine obere Umfangsfläche der Förderrollen dient hierbei zur direkten Aufnahme des Förderguts. Es können auch Förderrollen in Gurt- und/oder Bandförderern eingesetzt werden, wobei eine Oberfläche des Gurts bzw. Bands zur Aufnahme des Förderguts dient. Grundsätzlich können hierbei nicht angetriebene, also antriebslose oder motorbetriebene, also mit einer elektrischen Antriebseinheit ausgerüstete Förderrollen eingesetzt werden. Die motorbetriebenen Förderrollen können insbesondere mittels Übertragungselementen mit einer oder mehreren nicht angetriebenen Förderrollen gekoppelt sein, um diese in Rotation zu versetzen. Motorbetriebene Förderrollen dieser Art werden auch als Motorrollen, Rollenantriebe und in anderer Weise bezeichnet. Eine motorbetriebene Förderrolle kann auch ein Trommelmotor sein, der beispielsweise zum Antrieb eines Förderbandes als endseitige Umlenkrolle eingesetzt ist oder in anderer Form eine Förderstrecke mit Förderband oder anders aufgebaute Förderstrecke antreibt. Oftmals weisen Förderanlagen einen komplexen Aufbau auf, in dem zahlreiche Ein- und Ausschleusungen, Verzweigungen, Kreuzungen oder dergleichen auftreten, wobei häufig auf einer oder mehr als einer Ebene die Fördervorgänge ablaufen. Um in solchen Förderanlagen einen störungsfreien und zugleich für die geförderten Gegenstände beschädigungsfreien Betrieb zu gewährleisten, werden die Fördervorrichtungen oftmals im sogenannten staudrucklosen Betrieb (ZPA) oder in einem Betrieb mit einem geringen Staudruck (LPA) betrieben. Hierbei sollen die auf der Förderstrecke befindlichen Fördergüter nicht miteinander in Kontakt kommen bzw. nur mit geringem Staudruck gegeneinander in Kontakt kommen, sodass sich nicht durch aufsummierte Kontaktkräfte Beschädigungen an einem Fördergut ergeben können.

Um Förderanlagen mit einem solchen Aufbau für individuelle und von Fördergut zu Fördergut variierende Aufgaben anzusteuern und um eine staudrucklose Förderung oder eine Förderung mit geringem Staudruck umzusetzen, werden Förderstrecken der Förderanlagen typischerweise in eine Vielzahl von Förderzonen unterteilt. Jede Förderzone weist hierbei mehrere hintereinander angeordnete Förderrollen auf, wobei zumindest eine Förderrolle motorbetrieben ist. Die motorbetriebene Förderrolle kann beispielsweise mittels Treibriemen, Ketten oder dergleichen mit benachbarten mitlaufenden Rollen gekoppelt sein und diese antreiben, um auf diese Art eine einheitlich angesteuerte Förderzone zu definieren. Mehrere solche Förderzonen können dann in der Förderstrecke hintereinander angeordnet werden, um das Fördergut entlang dieser Förderstrecke zu befördern. Allerdings kann alleinig die Einteilung in mehrere Förderzonen einen staudrucklosen Betrieb der Förderanlagen nicht gewährleisten. Zusätzlich weisen Förderzonen oftmals einen Sensor auf, der die Anwesenheit eines Förderguts in der Förderzone erfassen kann. Dadurch können die Fördergüter auf eine Förderstrecke vorzugsweise im staudrucklosen Einzelplatzabzug oder im Blockabzug gefördert werden.

Vorbekannte Förderanlagen sind aus EP 1 590 275 B1 und US 6,253,909 B1 bekannt. Diese Förderanlagen weisen ein System aus einer Vielzahl von Förderzonen auf, die jeweils durch Steuerungseinheiten gesteuert werden. Die Steuerungseinheiten der Förderzonen können untereinander Daten austauschen, um die individuellen Ansteuerungsvorgänge für jede Förderzone in Abhängigkeit der Fördersituation auf stromaufwärts und/oder stromabwärts gelegene Förderzonen zu realisieren.

Um den Anforderungen an eine fortschrittliche Steuerungstechnik gerecht zu werden, ist es erforderlich, dass die Charakteristik und programmierten Eigenschaften von Motorrollen innerhalb des Fördersystems aufeinander abgestimmt sind. Als Charakteristik einer Förderrolle ist hierbei beispielsweise ein Übersetzungsverhältnis eines darin eingebauten Getriebes, ein Beschleunigungs- und Abbremsverhalten des Antriebs oder sonstige jegliche nicht-veränderlichen geometrischen, elektrischen oder mechanischen Eigenschaften zu verstehen. Die notwendige Abstimmung macht es erforderlich, bei Ausfall und Ersatz einer Förderrolle oder bei einer Neukonfiguration des Fördersystems die ersatzweise eingesetzte Förderrolle bzw. alle Förderrollen des Fördersystems neu zu konfigurieren oder anhand ihrer Konfiguration auszuwählen und anzuordnen. Dies nimmt erheblich Zeit in Anspruch und führt daher zu einem unerwünschten Nutzungsausfall des Fördersystems.

Da ein Ausfall einer Förderrolle Nutzungsausfälle und finanzielle Schäden nach sich zieht, die weit über den rein finanziellen Einsatz für den Ersatz des störungsauslösenden Bauteils hinausgehen, ist es weiterhin wünschenswert die Zeit für verschleißbedingten Ersatz zu verkürzen.

Es ist bekannt, Förderrollen über eine Datenbusleitung mit digitalen Steuerungsdaten mittels Datenbustechnik anzusteuern und zu programmieren. Unter einer solchen Datenbustechnik wird generell eine Art der Datenkommunikation verstanden, bei der mehrere Peripheriegeräte an einer gemeinsamen Datenleitung angeschlossen sind und die individuelle Ansteuerung eines einzelnen aus der Vielzahl der Steuerungseinheiten durch Vergabe von Busadressen erfolgt, die jeden in einem Datenpaket enthaltenen Steuerungsbefehl für eine individuelle Steuerungseinheit innerhalb des Datenpakets als Adressblock vorangestellt werden, um die gewünschte, individuelle Steuerungseinheit mit diesem Adressblock anzusprechen und ihr den entsprechenden Befehl innerhalb diesen Datenblocks zu übermitteln. Dies eröffnet generell die Möglichkeit, Umprogrammierungen an solchen Förderrollen schneller vorzunehmen. Allerdings kann diese Vorgehensweise nicht in herkömmlichen Fördervorrichtungen eingesetzt werden, in denen die Förderrollen mittels analoger Steuerungssignale über eine ein- oder mehradrige analoge Steuerungsleitung gesteuert werden. Hier ist regelmäßig eine genaue Abstimmung der Steuersignale in Kenntnis der Charakteristik der Förderrolle vorzunehmen, wodurch unvermeidbar Zeit in Anspruch genommen werden muss.

Es ist daher Aufgabe der vorliegenden Erfindung, eine Möglichkeit zu eröffnen, den Wartungsaufwand und die Stillstandzeit bei Ausfall einer Fördervorrichtung in einem Fördersystem zu verringern, in denen auch oder nur analog angesteuerte Fördervorrichtungen eingesetzt sind.

Diese Aufgabe wird gelöst durch eine Fördervorrichtung der eingangs genannten Art, bei der das Antriebssteuerungsmodul ausgebildet ist, um in einem analogen Betriebszustand über die Anschlussschnittstelle analoge Steuerungssignale zu empfangen und die Antriebseinheit in Abhängigkeit dieser Steuerungssignale zu steuern, in einem Digitalkommunikationszustand über die Anschlussschnittstelle digitale Diagnosesignale auszugeben, und aus dem Betriebszustand in den Digitalkommunikationszustand bei Empfang eines Umschaltbefehls umzuschalten, wobei der Umschaltbefehl aus einem vorbestimmten analogen Steuerungssignal oder einer vorbestimmten Abfolge analoger Steuerungssignale besteht.

Die Erfindung beruht dabei auf folgenden Erkenntnissen:
Um einen Ist-Zustand in größeren Förderanlagen abfragen zu können wäre ein enormer Verkabelungsaufwand notwendig. Darüber hinaus sind meist herkömmliche Steuerungseinheiten nicht dafür ausgebildet, um Daten abzufragen oder zu verarbeiten. Aufgrund der Komplexität von Förderanlagen und dem vorzugsweise voll- oder teil-automatisierten Betrieb kann auch ein Bedienpersonal, ein Kamerasystem oder dergleichen Auffälligkeiten oder Fehler meist nicht oder nur zu spät erkennen.

Um diesen Verkabelungsaufwand zu reduzieren, ist es zwar bekannt, motorbetriebene Förderrollen mit Busleitungen auszustatten, um über eine in dem Förderrollenrohr angeordnete Busschnittstelle mit einer Antriebseinheit signaltechnisch verbunden zu sein. Hierdurch wird dann zwar das Überwachen zahlreicher Ist-Zustände der Motorrolle sowie eine Übertragung von Soll-Zuständen in die Motorrolle ermöglicht und eine Ausstattung mit zahlreichen einadrigen analogen Datenbusleitungen kann vermieden werden.

Nachteilig an der Ausstattung mit Busleitungen ist jedoch, dass bestehende Förderanlagen aufwendig umgerüstet werden müssen und/oder die Fördervorrichtungen bzw. motorbetriebenen Förderrollen mit einer Fördervorrichtung komplett ausgetauscht werden müssen, was zeitaufwändig und kostenintensiv ist. Darüber hinaus können Antriebseinheiten mit Standardschnittstellen auch oftmals nicht mit einem Busanschluss ausgerüstet werden. Auch ist oft nachteilig, dass Antriebseinheiten in beispielsweise Förderrollen verbaut und nur schwer zugänglich sind. Demnach überwiegen die Vorteile dieser Lösung meist nur bei neu zu planenden Förderanlagen.

Aus diesem Grund ist es insbesondere erstrebenswert einen Ist-Zustand regelmäßig oder kontinuierlich mit einem Soll-Zustand abzugleichen. Dabei ist es oftmals erwünscht, zu Diagnosezwecken oder um eine Neuprogrammierung vorzunehmen, Daten aus vorzugsweise der Antriebseinheit auszulesen und auszuwerten.

Erfindungsgemäß ist das Antriebssteuerungsmodul ausgebildet, um in einem Betriebszustand analoge Steuerungsdaten, die der Steuerung des Antriebs der Motorrolle dienen, zu empfangen und diese der Antriebseinheit zuzuleiten, sodass daraus die Bewegung der Fördervorrichtung analog gesteuert wird. Die Motorelektronik ist weiterhin ausgebildet, um bei Empfang eines vorbestimmten analogen Steuerungssignals oder einer vorbestimmten Abfolge analoger Steuerungssignale über die Anschlussschnittstelle dies als einen Umschaltbefehl zu interpretieren bzw. zu dekodieren und nach Empfang eines solchen Umschaltbefehls in einen Digitalkommunikationszustand zu wechseln. In diesem Digitalkommunikationszustand kann die Fördervorrichtung Konfigurationsdaten über die Anschlussschnittstelle übertragen oder empfangen. Diese Konfigurationsdaten können beispielsweise eine Abfolge von digitalen, also eine Abfolge von binär kodierten, Dateninformationen umfassen.

Diese Konfigurationsdaten können einerseits permanente, also nicht-veränderliche Informationen über die Fördervorrichtung enthalten, die nach außerhalb der Fördervorrichtung übertragen werden und eine (oder mehrere) Charakteristik(en) der Fördervorrichtung beschreiben, beispielsweise eine Seriennummer, ein Herstellungsdatum, ein Getriebeverhältnis, eine Getriebeart, eine Motorbauart oder eine geometrische Eigenschaft der Fördervorrichtung. In diesem Fall dienen die Konfigurationsdaten dazu, die Eigenschaften der Fördervorrichtung schnell für einen Benutzer oder eine andere elektronische Einheit erkennbar zu machen, um den zeitlichen Aufwand für den Ersatz der Fördervorrichtung oder die Anpassung anderer Komponenten anhand dieser Eigenschaften zu verkürzen.

Die Konfigurationsdaten können weiterhin nicht-permanente, also veränderliche Informationen über die Fördervorrichtung enthalten, die nach außerhalb der Fördervorrichtung übertragen werden und die eine oder mehrere Betriebsdateninformationen der Fördervorrichtung beschreiben, beispielsweise eine Betriebsstundenzahl, eine Anzahl von Anlaufvorgängen, eine maximale Betriebstemperatur, eine Umdrehungsanzahl einer Antriebseinheit, und/oder Programmierdaten und/oder Abfragedaten, eine Spitzenlast oder eine Anzahl der aufsummierten Umdrehungen seit Inbetriebnahme der Fördervorrichtung. In diesem Fall dienen die Konfigurationsdaten dazu, den fortschreitenden Betriebszustand der Fördervorrichtung schnell für einen Benutzer oder eine andere elektronische Einheit erkennbar zu machen, um daraus gegebenenfalls einen Ersatz, eine Wartung oder eine Steuerungsanpassung zu planen.

Es wurde erkannt, dass es zum Zwecke des zuverlässigen Betriebs einer gesamten Förderanlage vorteilhaft ist, bestimmte Daten einer Förderrolle bzw. der Antriebseinheit und/oder Steuerungseinheit und/oder einer Förderzone und/oder einer gesamten Förderstrecke schnell auslesen zu können, um Fehler oder Ausfälle frühzeitig zu erkennen oder vorherzusehen und so vermeiden zu können.

Durch die Erfindung wird eine Möglichkeit bereitgestellt, einen Ist-Zustand zu überwachen. Die erfindungsgemäße Fördervorrichtung ist zum Austausch der Konfigurationsdaten ausgebildet und benutzt hierzu vorhandene Ein- und/oder Ausgänge der Antriebseinheit bzw. deren Steuerungseinheit, also vorhandene ein- oder mehradrige elektrische Leitungen, die im Betrieb zur Übertragung analoger Steuerungsdaten verwendet werden.

Um eine derartige Übertragung der Konfigurationsdaten zu ermöglichen, kann das mit der Antriebseinheit signaltechnisch verbundene Antriebssteuerungsmodul ausgebildet sein, um eine digitale Datenübertragung mit einer beabstandet von der Fördervorrichtung angeordneten und mit dieser über eine Schnittstelle signaltechnisch gekoppelten Diagnoseeinrichtung zu ermöglichen. Die Diagnoseeinrichtung kann vorzugsweise ausgebildet sein, um digital kodierte Konfigurationssignale zu senden und/oder zu empfangen und um die empfangenen Konfigurationssignale zu dekodieren, um daraus Diagnoseinformationen zu erhalten. Darüber hinaus ermöglicht das Antriebssteuerungsmodul das Empfangen des Umschaltbefehls, vorzugsweise durch Erkennen eines vorbestimmten analogen Steuerungssignals oder einer vorbestimmten Abfolge von analogen Steuerungssignalen. Ferner kann das Antriebssteuerungsmodul in Abhängigkeit des Umschaltbefehls das Umschalten des Betriebszustands in den Digitalkommunikationszustand und in Abhängigkeit des Empfangs eines digitalen oder analogen Rückschaltbefehls das Rückschalten aus dem Digitalkommunikationszustand in den Betriebszustand veranlassen.

Erfindungsgemäß werden in dem Betriebszustand analoge Steuerungssignale an die Antriebseinheit gesendet. Dies sind beispielsweise stufenlos variierbare Spannungssignale aus einem bestimmten Spannungsbereich, beispielsweise 0 bis 5V, welche ein Steuerungssignal für eine Geschwindigkeit der Antriebseinheit darstellen. Gegebenenfalls können im Betriebszustand auch analoge Fehlersignale der Antriebseinheit von dem Antriebssteuerungsmodul ausgesendet werden. Der Digitalkommunikationszustand stellt eine zweite Betriebsart der Fördervorrichtung dar. Hierbei werden vorzugsweise keine analogen Steuerungssignale an die Antriebseinheit gesendet. Stattdessen können vorzugsweise zu Diagnosezwecken oder zur Programmierung Konfigurationsdaten übertragen werden.

Generell kann eine Fördervorrichtung mit einer Steuerungseinheit signaltechnisch verbunden sein, die außerhalb des Rollenkörpers angeordnet ist und an welche die Konfigurationsdaten gesendet werden. Die Steuerungseinheit umfasst in diesem Fall eine Diagnoseeinrichtung. Die Fördervorrichtung kann in diesem Fall permanent mit der Steuerungsvorrichtung verbunden sein. In einer anderen Ausgestaltung kann die Diagnoseeinrichtung als separate elektronische Baueinheit vorgesehen sein, die anstelle oder zusätzlich zu einer Steuerungseinheit mit der Fördervorrichtung verbunden ist. In diesem Fall wird die Verbindung in der Regel nur zum Zwecke und für die Dauer der Auslesung von Diagnosedaten der Fördervorrichtung hergestellt.

Die erfindungsgemäß bereitgestellte Antriebseinheit kann vorzugsweise für eine Drehmomenterzeugung und Rotationsbewegung zwischen einem Achselement und einem drehbar um das Achselement gelagerten Förderrollenrohr ausgebildet und mit dem Achselement und dem Förderrollenrohr mechanisch gekoppelt sein, wobei die Antriebseinheit vorzugsweise innerhalb des Förderrollenrohrs angeordnet ist. Das mit der Antriebseinheit signaltechnisch gekoppelte elektronische Antriebssteuerungsmodul kann vorzugsweise auch innerhalb des Förderrollenrohres angeordnet sein.

Das Antriebssteuerungsmodul ist erfindungsgemäß einerseits dazu ausgebildet, um in dem Betriebszustand analoge Steuerungssignale zu empfangen und die Antriebseinheit hiermit anzusteuern. Diese analogen Steuerungssignale kann das Antriebssteuerungsmodul vorzugsweise von einer außerhalb des Förderrollenrohres angeordneten Steuerungseinheit empfangen. Hierzu kann das Antriebssteuerungsmodul vorzugsweise mittels einer Analogdatenleitung mit der Steuerungseinheit signaltechnisch verbunden sein. Ferner kann das Antriebssteuerungsmodul den Umschaltbefehl erkennen und die Betriebsart zwischen dem Analogkommunikationszustand (dem Betriebszustand) und dem Digitalkommunikationszustand umschalten. Insbesondere bevorzugt kann das Antriebssteuerungsmodul also wahlweise, in der analogen Betriebsart, analoge Steuerungssignale empfangen und verarbeiten und Statussignale senden und in der digitalen Betriebsart digitale Konfigurationsdaten bzw. Betriebs- und Diagnosedaten senden.

Generell kann unter dem Austauschen und/oder Übertragen von Daten, insbesondere von Konfigurationsdaten, ein Übertragen von Signalen, insbesondere analoger Steuerungssignale und/oder digitaler Diagnosedaten, also Senden von Signalen und/oder Empfangen von Signalen verstanden werden. Besonders bevorzugt kann das Übertragen umfassen, dass zunächst Signale empfangen werden und diese dann weiterversendet werden.

Das Antriebssteuerungsmodul kann vorzugsweise ausgebildet sein, Betriebs- und Diagnosedaten aufzubereiten und zu bilden und vorzugsweise an ein Bedienpersonal oder ein externes Anlagensteuerungsmodul bzw. eine Kommunikationsbox zu übertragen.

Diese Daten können aus den Signalen bzw. Signalverläufen unterschiedlicher Sensoren und Detektoren generiert werden.

Diese Diagnosedaten können vorzugsweise Betriebsdaten und/oder Konfigurationsdaten und/oder Sensordaten unterschiedlicher Sensoren bzw. Detektoren darstellen. Weiter bevorzugt kann das Antriebssteuerungsmodul ausgebildet sein, um die empfangenen Konfigurationsdaten zu verarbeiten und/oder aufzubereiten. Mit der erfindungsgemäß fortgebildeten Fördervorrichtung wird eine Möglichkeit bereitgestellt, um einen Datentransfer bei analog gesteuerten motorbetriebenen Förderrollen zu ermöglichen. Das erfindungsgemäße Antriebssteuerungsmodul ermöglicht es, Daten über die bereits vorhandenen Anschlüsse und Datenleitungen zu übertragen. Hierdurch können Ist-Zustände der Motorrolle überwacht werden.

Gemäß einer ersten bevorzugten Ausführungsform ist vorgesehen, dass das Antriebssteuerungsmodul ausgebildet ist, um aus dem Digitalkommunikationszustand in den Betriebszustand bei Empfang eines Rückschaltbefehls umzuschalten, wobei der Rückschaltbefehl durch ein vorbestimmtes digitales Datensignal gebildet wird.

Das Antriebssteuerungsmodul ist hierbei ausgebildet, um neben dem analog übertragenen Umschaltbefehl auch einen Rückschaltbefehl zu empfangen, der als digitales Signal ausgebildet bist und im Digitalkommunikationsmodus übertragen wird. Hierdurch kann die Rückkehr der Fördervorrichtung in den Betriebsmodus ausgelöst werden, nachdem die Diagnose der Fördervorrichtung abgeschlossen ist.

Vorzugsweise können die Konfigurationsdaten nur in Folge entsprechender Befehle in Form von Abfragedaten übertragen werden. Hierbei ist es insbesondere bevorzugt, wenn das Antriebssteuerungsmodul ausgebildet ist, um vorzugsweise im Digitalkommunikationszustand Abfragedaten zu empfangen und in Reaktion auf diese Abfragedaten bestimmte Konfigurationsdaten zu senden. Hierbei kann es besonders bevorzugt sein, dass das Antriebssteuerungsmodul ausgebildet ist, um unterschiedliche Abfragedaten zu empfangen, um entsprechend unterschiedliche Konfigurationsdaten zu senden.

Eine weitere bevorzugte Ausführungsform zeichnet sich dadurch aus, dass das Antriebssteuerungsmodul ausgebildet ist, um den Umschaltbefehl als ein einziges analoges Steuerungssignal mit einem vorbestimmten Analogwert und/oder als eine vorbestimmte Abfolge von analogen Steuerungssignalen mit vorbestimmten übereinstimmenden Analogwerten oder mit vorbestimmten voneinander verschiedenen Analogwerten zu empfangen.

Vorzugsweise kann das einzige analoge Steuerungssignal ein Steuerungssignal, also vorzugsweise ein Spannungssignal, sein, das im Betriebsmodus keine Anwendung zur Steuerung einer Bewegung der Fördervorrichtung findet, beispielsweise ein Analogsignal von 5,2V, das außerhalb des verwendeten analogen Regelbereichs von 0 bis 5V liegt. Derartige analoge Steuerungssignale können insbesondere bevorzugt zur Aktivierung des Umschaltvorgangs generiert und/oder abgerufen werden.

Alternativ kann eine vorbestimmte Abfolge von analogen Steuerungssignalen einen Umschaltbefehl kodieren, wobei diese Abfolge im Betriebsmodus keine Anwendung zur Steuerung einer Bewegung der Fördervorrichtung findet. So kann beispielsweise eine Abfolge von mehrfach in kurzer Zeit gesendeten Richtungsumkehrsignalen einen kodierten Umschaltbefehl darstellen. Insbesondere ist zu verstehen, dass der Umschaltbefehl auch durch eine vorbestimmte Abfolge von Steuerungssignalen innerhalb einer vorbestimmten Zeitspanne oder mit einem vorbestimmten Zeitabstand voneinander gebildet werden kann. Besonders bevorzugt können analoge Steuerungssignale solche Steuerungssignale umfassen, die einzeln und/oder auch in einer vorbestimmten teilweisen Abfolge im Betriebsmodus Anwendung zur Steuerung einer Bewegung der Fördervorrichtung finden. Hierdurch kann der gesamte analoge Regelungsbereich im Betriebsmodus genutzt werden, jedoch der Umschaltbefehl wird durch eine für den Betriebsmodus atypische Abfolge, die vorherbestimmt ist, kodiert. Generell ist erfindungsgemäß unter einer vorherbestimmten Abfolge oder einem Steuerungssignal zu verstehen, dass dieses der Sendeeinheit und der Empfangseinheit vorbekannt ist, also typischerweise eingespeichert ist, und für die Kodierung bzw. Dekodierung des Umschaltbefehls verwendet wird.

Noch weiter ist es bevorzugt, dass die Anschlussschnittstelle einen ersten Steuerungsdatenkontaktanschluss aufweist und das Antriebssteuerungsmodul ausgebildet ist, um ein einziges analoges Steuerungssignal und/oder eine Abfolge von analogen Steuerungssignalen über den ersten Steuerungsdatenkontaktanschluss zu übertragen, wobei vorzugsweise die Abfolge von analogen Steuerungssignalen vorzugsweise zumindest eine zeitliche Folge eines ersten Spannungssignals, eines zweiten Spannungssignals und eines dritten Spannungssignals umfasst. Vorzugsweise können das erste Spannungssignal und/oder das zweite Spannungssignal und/oder das dritte Spannungssignal unterschiedlich sein. Bei dieser Ausgestaltung wird der Umschaltbefehl über eine einzige Leitung gesendet, vorzugsweise als Abfolge von Steuersignalen.

Dabei kann weiter bevorzugt das Antriebssteuerungsmodul ausgebildet sein, um im Digitalkommunikationszustand über den ersten Steuerungsdatenkontaktanschluss eine Abfolge von Konfigurationsdaten zu empfangen und/oder zu senden. Gemäß dieser Ausgestaltung ist der erste Steuerungsdatenkontaktanschluss dazu ausgebildet, um in dem Betriebszustand analoge Steuerungssignale zu empfangen und in dem Digitalkommunikationszustand Konfigurationsdaten zu Diagnosezwecken zu übertragen.

Gemäß einer weiter bevorzugten Ausführungsvariante ist vorgesehen, dass die Anschlussschnittstelle einen ersten Steuerungsdatenkontaktanschluss und einen zweiten Steuerungsdatenkontaktanschluss aufweist und das Antriebssteuerungsmodul ausgebildet ist, um den Umschaltbefehl als ein erstes vorbestimmtes analoges Steuerungssignal an dem ersten Steuerungsdatenkontaktanschluss und ein zweites vorbestimmtes analoges Steuerungssignal an dem zweiten Steuerungsdatenkontaktanschluss zu empfangen. Durch diese Ausgestaltung kann die Anschlussschnittstelle im Betriebszustand vorzugsweise zeitgleich ein erstes analoges Steuerungssignal empfangen und ein zweites analoges Steuerungssignal, vorzugsweise ein Fehlersignal, übertragen. Korrespondierend dazu kann die Anschlussschnittstelle in dem Digitalkommunikationszustand vorzugsweise zeitgleich und/oder in einem vorbestimmten Zeitabstand ein erstes Kommunikationssignal empfangen und ein zweites Kommunikationssignal empfangen. Insbesondere kann auch ein erstes analoges Steuerungssignal und ein zweites analoges Steuerungssignal bzw. ein erstes Kommunikationssignal und ein zweites Kommunikationssignal vorzugsweise zeitgleich und/oder in einem vorbestimmten Zeitabstand gesendet und/oder übertragen werden.

Das Antriebssteuerungsmodul kann vorzugsweise ausgebildet sein, um das erste und das zweite Steuerungssignal synchron zu empfangen, das erste und das zweite Steuerungssignal zeitversetzt zu empfangen, das erste und das zweite Steuerungssignal als ein jeweils einziges analoges Steuerungssignal zu empfangen, oder um das erste und das zweite Steuerungssignal jeweils als eine zeitliche Abfolge von analogen Steuerungssignal zu empfangen.

Ferner ist es bevorzugt, dass das Antriebssteuerungsmodul ausgebildet ist, um im Digitalkommunikationsmodus Konfigurationsdaten über den ersten Steuerungsdatenkontaktanschluss und den zweiten Steuerungsdatenkontaktanschluss zu senden oder zu empfangen. Dabei kann bevorzugt das Antriebssteuerungsmodul ausgebildet sein, um im Digitalkommunikationszustand über den ersten Steuerungsdatenkontaktanschluss eine Abfolge von Konfigurationsdaten zu empfangen und/oder über den zweiten Steuerungsdatenkontaktanschluss eine Abfolge von Konfigurationsdaten zu senden. Insbesondere ist es bevorzugt, wenn das Senden und das Empfangen vorzugsweise zeitgleich und oder in einer zeitlichen Abfolge stattfindet.

Konfigurationsdaten, die von dem Antriebssteuerungsmodul gesendet werden, dienen insbesondere Diagnosezwecken. Konfigurationsdaten die von dem Antriebssteuerungsmodul empfangen werden, können beispielsweise Abfragedaten bilden, die vorzugsweise das Senden bestimmter Konfigurationsdaten von dem Antriebssteuerungsmodul an eine externe Diagnoseeinrichtung veranlassen.

Vorzugsweise kann das Antriebssteuerungsmodul ausgebildet sein, um in einem ersten Schritt beispielsweise Abfragedaten zu empfangen, wobei vorzugsweise diese Abfragedaten in Form von digitalen Daten empfangen werden und bestimmte Konfigurationsdaten abfragen.

Ein weiterer Aspekt der Erfindung ist eine Diagnoseeinrichtung für eine Fördervorrichtung mit einer motorbetriebenen Förderrolle, umfassend eine elektronische Diagnoseeinheit mit einer Steuerungsdatenschnittstelle, bei der die elektronische Diagnoseeinheit ausgebildet ist, um einen analogen Umschaltbefehl an die Steuerungsdatenschnittstelle auszugeben, wobei der analoge Umschaltbefehl als ein vorbestimmtes analoges Steuerungssignal oder als eine vorbestimmte Abfolge analoger Steuerungssignale über die Steuerungsdatenschnittstelle ausgegeben wird, nach Ausgabe des analogen Umschaltbefehls in einem Digitalkommunikationszustand einen Diagnosedatensatz über die Steuerungsdatenschnittstelle zu empfangen und den Diagnosedatensatz als eine Abfolge digitaler, binär kodierter Diagnosedaten zu empfangen.

Diese Diagnoseeinrichtung kann in eine extern und beabstandet von der Fördervorrichtung, also beispielsweise einer Motorrolle, angeordnete Steuerungseinheit integriert sein, die kabelgebunden mit der Fördervorrichtung verbunden ist und beispielsweise auch zwei, drei, vier oder mehr Fördervorrichtungen steuern kann. Die Diagnoseeinrichtung kann auch als separate, nur zur Diagnose und/oder Programmierung dienende Komponente ausgeführt sein, die nur zeitlich vorübergehend zum Zweck der Diagnose oder Programmierung mit der Fördervorrichtung verbunden wird.

Dabei kann die die Diagnoseeinrichtung eine Kommunikationsschnittstelle umfassen, die beispielsweise eine graphische Benutzerschnittstelle sein kann, die ausgebildet ist, um die Diagnosedaten einem Benutzer anzuzeigen. Insbesondere bevorzugt, kann die graphische Benutzerschnittstelle auch ausgebildet sein, um Benutzereingaben zu empfangen und ein manuelles Steuern der Fördervorrichtung mittels analoger Signale aus diesen Benutzereingaben zu ermöglichen. Die Kommunikationsschnittstelle kann auch dazu ausgebildet sein, Konfigurationsdaten an eine zentrale Steuerungseinheit zu übermitteln.

Die Diagnoseeinrichtung kann fortgebildet werden, indem die elektronische Diagnoseeinheit ausgebildet ist, um von einer Benutzerschnittstelle einen Benutzerumschaltbefehl zu empfangen und um bei Empfang des Benutzerumschaltbefehls den analogen Umschaltbefehl an die Steuerungsdatenschnittstelle auszugeben.

Die Diagnoseeinrichtung kann weiter fortgebildet werden, indem die elektronische Diagnoseeinheit ausgebildet ist, um den Umschaltbefehl als ein einziges analoges Steuerungssignal mit einem vorbestimmten Analogwert oder als eine vorbestimmte Abfolge von analogen Steuerungssignalen auszugeben.

Die Diagnoseeinrichtung kann weiter fortgebildet werden, indem die Steuerungsdatenschnittstelle einen ersten Steuerungsdatenkontaktanschluss aufweist und die elektronische Diagnoseeinheit ausgebildet ist, um das einzige analoge Steuerungssignal mit einem vorbestimmten Analogwert oder als eine vorbestimmte Abfolge von analogen Steuerungssignalen über den ersten Steuerungsdatenkontaktanschluss auszugeben.

Die Diagnoseeinrichtung kann weiter fortgebildet werden, indem die Steuerungsdatenschnittstelle einen ersten Steuerungsdatenkontaktanschluss und einen zweiten Steuerungsdatenkontaktanschluss umfasst und die elektronische Diagnoseeinheit ausgebildet ist, um den Umschaltbefehl als ein erstes vorbestimmtes analoges Steuerungssignal an den ersten Steuerungsdatenkontaktanschluss und ein zweites vorbestimmtes analoges Steuerungssignal an den zweiten Steuerungsdatenkontaktanschluss auszugeben, wobei das erste und zweite vorbestimmte analoge Steuerungssignal zeitgleich ausgegeben wird, oder das erste und zweite vorbestimmte analoge Steuerungssignal in einem vorbestimmten Zeitabstand ausgegeben wird.

Die Diagnoseeinrichtung kann weiter fortgebildet werden, indem die Steuerungsdatenschnittstelle einen ersten Steuerungsdatenkontaktanschluss und einen zweiten Steuerungsdatenkontaktanschluss umfasst und die elektronische Diagnoseeinheit ausgebildet ist, um im Digitalkommunikationszustand über den ersten Steuerungsdatenkontaktanschluss digitale, binär kodierte Diagnoseauskunftdaten zu empfangen und über den zweiten Steuerungsdatenkontaktanschluss digitale, binär kodierte Diagnoseabfragedaten zu senden.

Die Diagnoseeinrichtung kann weiter fortgebildet werden, indem die elektronische Diagnoseeinheit in dem Betriebszustand ausgebildet ist, um analoge Steuerungsdaten an ein an die Steuerungsdatenschnittstelle angeschlossene analoges Antriebssteuerungsmodul einer Fördervorrichtung zu übermitteln, und den Umschaltbefehl in dem Betriebszustand an die Steuerungsdatenschnittstelle auszugeben, und nach Ausgabe des Umschaltbefehls aus dem Betriebszustand in den Digitalkommunikationszustand umzuschalten, in dem die elektronische Diagnoseeinheit zum Empfang des Diagnosedatensatzes über die Steuerungsdatenschnittstelle ausgebildet ist.

Die Diagnoseeinrichtung kann weiter fortgebildet werden, indem die Diagnoseschnittstelle eine graphische Benutzerschnittstelle ist, die ausgebildet ist, um die Diagnosedaten einem Benutzer anzuzeigen.

Hinsichtlich der Diagnoseeinrichtung und deren Fortbildungen ist zu verstehen, dass diese insbesondere ausgestaltet sind, um als Sender/Empfänger korrespondierend zu der zuvor erläuterten Fördervorrichtung als Empfänger/Sender eingesetzt zu werden und es wird auf die zu der Fördervorrichtung erläuterten Vorteile und Varianten entsprechend Bezug genommen.

Die Erfindung wird weiterhin gebildet durch ein Fördersystem umfassend eine Diagnosevorrichtung der zuvor beschriebenen Bauart und eine Fördervorrichtung der zuvor beschriebenen Bauart, wobei die Steuerungsschnittstelle mit der Anschlussschnittstelle verbunden ist zur Analogdatenübertragung in dem Betriebszustand, und zur Übertragung digitaler, binär kodierter Konfigurationsdaten in dem Digitalkommunikationszustand.

Dabei können die digitalen, binär kodierten Konfigurationsdaten eine kodierte Information über: eine nicht-veränderliche Eigenschaft der Fördervorrichtung, wie ein Getriebeverhältnis, eine Getriebeart, eine Seriennummer, eine Motorbauart, und/oder eine veränderliche Eigenschaft der Fördervorrichtung, wie eine Betriebsstundenzahl, eine Anzahl von Anlaufvorgängen, eine maximale Betriebstemperatur, eine Umdrehungsanzahl einer Antriebseinheit und/oder Abfragedaten umfassen.

Gemäß einem weiteren Aspekt der Erfindung wird die eingangs genannte Aufgabe gelöst durch eine Nachrüsteinheit für eine Fördervorrichtung, umfassend ein elektronisches Antriebssteuerungsmodul mit einer Anschlussschnittstelle, das zum Senden und/oder Empfangen von Konfigurationsdaten über die Anschlussschnittstelle ausgebildet ist, wobei das Antriebssteuerungsmodul ausgebildet ist, um in einem Betriebszustand über die Anschlussschnittstelle analoge Steuerungssignale zu empfangen und die Antriebseinheit in Abhängigkeit dieser Steuerungssignale zu steuern, in einem Digitalkommunikationszustand über die Anschlussschnittstelle digitale Diagnosesignale auszugeben, und um aus dem Betriebszustand in den Digitalkommunikationszustand bei Empfang eines Umschaltbefehls umzuschalten, wobei der Umschaltbefehl aus einem vorbestimmten analogen Steuerungssignal oder einer vorbestimmten Abfolge analoger Steuerungssignale besteht.

Ein weiterer Aspekt der Erfindung betrifft eine Verwendung einer Nachrüsteinheit für eine Fördervorrichtung.

Gemäß eines weiteren Aspekts der vorliegenden Erfindung wird die eingangs genannte Aufgabe gelöst durch ein Verfahren zum Ausgeben von Konfigurationsdaten aus einer analog gesteuerten Fördervorrichtung, mit den Schritten:
- Empfangen eines Umschaltbefehls als ein vorbestimmtes analoges Steuerungssignal oder eine vorbestimmte Abfolge von analogen Steuerungssignalen in einem Antriebssteuerungsmodul,
- In Reaktion auf den Empfang des Umschaltbefehls Umschalten des Antriebssteuerungsmoduls aus einem Betriebszustand, in dem das Antriebssteuerungsmodul zum Empfang von analogen Steuerungssignalen und zur Steuerung einer Antriebseinheit in Abhängigkeit der analogen Steuerungssignale geschaltet ist, in einen Digitalkommunikationszustand, in dem das Antriebssteuerungsmodul zum Senden und Empfangen von Konfigurationsdaten geschaltet ist,
- Kodieren von permanenten oder nicht permanenten Eigenschaftsinformationen der Fördervorrichtung in dem Antriebssteuerungsmodul in eine Abfolge von digitalen, binär kodierten Konfigurationsdaten, und
- Senden der Abfolge von digitalen, binär kodierten Konfigurationsdaten über eine Anschlussschnittstelle des Antriebssteuerungsmoduls.

Ein weiterer Aspekt der Erfindung ist ein Verfahren zum Auslesen von Konfigurationsdaten einer analog gesteuerten Fördervorrichtung, mit den Schritten:
- Senden eines Umschaltbefehls als ein vorbestimmtes analoges Steuerungssignal oder eine vorbestimmte Abfolge von analogen Steuerungssignalen aus einer elektronischen Diagnoseeinheit,
- Umschalten der elektronischen Diagnoseeinheit aus einem Betriebszustand, in dem die elektronische Diagnoseeinheit zum Senden von analogen Steuerungssignalen geschaltet ist, in einen Digitalkommunikationszustand, in dem die elektronische Diagnoseeinheit zum Senden und Empfangen von Konfigurationsdaten geschaltet ist
- Empfangen einer Abfolge von digitalen, binär kodierten Konfigurationsdaten,
- Dekodieren der Abfolge von digitalen, binär kodierten Konfigurationsdaten zu Diagnoseinformationen und
- Ausgeben der Diagnoseinformationen über eine Kommunikationsschnittstelle.

Vorzugsweise können die Diagnosedaten dem Bedienpersonal angezeigt werden und/oder an eine elektronische Empfangseinheit übermittelt werden.

Zu den Vorteilen, Ausführungsvarianten und Ausführungsdetails dieser weiteren Aspekte der Erfindung und ihrer jeweiligen Fortbildungen wird auf die vorangegangene Beschreibung zu den entsprechenden Merkmalen der Fördervorrichtung und der Diagnoseeinrichtung Bezug genommen.

Bevorzugte Ausführungsformen der Erfindung werden beispielhaft anhand der beiliegenden Figuren erläutert. Es zeigen:
- Fig. 1: Prinzipzeichnung einer erfindungsgemäßen motorbetriebenen Förderrolle in einem Längsschnitt;
- Fig. 2: Prinzipanordnung einer Fördervorrichtung mit einer motorbetriebenen Förderrolle in einer Förderstrecke;
- Fig. 3: schematische Darstellung eines erfindungsgemäßen Antriebssteuerungsmoduls einer Fördervorrichtung;
- Fig. 4: schematische Darstellung einer erfindungsgemäßen Fördervorrichtung zum Austausch von Kommunikationsdaten in einer ersten Ausführungsform,
- Fig. 5: schematische Darstellung einer erfindungsgemäßen Fördervorrichtung zum Austausch von Kommunikationsdaten in einer zweiten Ausführungsform, und
- Fig. 6: schematische Darstellung einer erfindungsgemäßen Fördervorrichtung zum Austausch von Kommunikationsdaten in einer dritten Ausführungsform

In den Figuren sind gleiche oder im Wesentlichen funktionsgleiche bzw. ähnliche Elemente mit den gleichen Bezugszeichen bezeichnet.

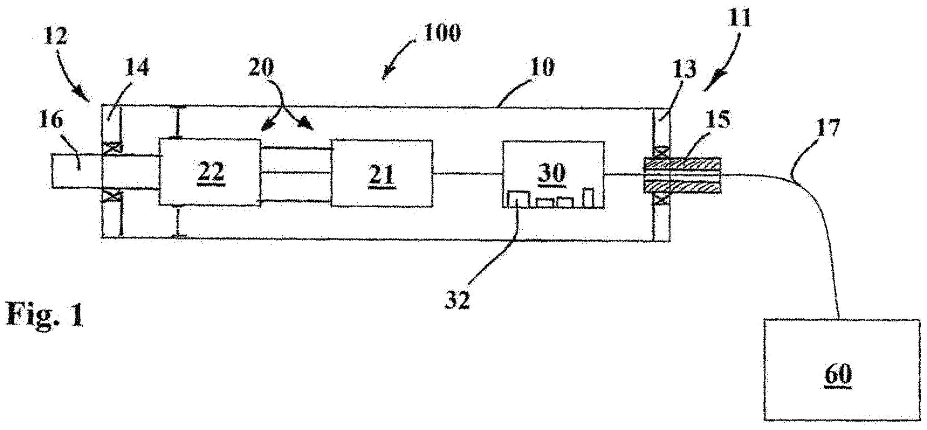

Figur 1 zeigt eine Prinzipzeichnung einer motorbetriebenen Förderrolle 100 mit einer erfindungsgemäßen Fördervorrichtung. Die motorbetriebene Förderrolle 100 umfasst ein Förderrollenrohr 10 mit einem ersten Ende 11 und einem diesem gegenüberliegenden zweiten Ende 12. Im ersten Ende 11 ist eine Endkappe 13 eingesetzt, die ein erstes Achselement 15, das seitlich aus dem ersten Ende 11 des Förderrollenrohrs 10 hinausragt, drehbar mittels einer Lagerungseinheit umgibt. Analog hierzu ist am zweiten Ende 12 eine Endkappe 14 eingesetzt, die ein zweites Achselement 16 mittels einer Lagerungseinheit umgibt. Die Achselemente 15 und 16 sind koaxial zueinander angeordnet und definieren eine Drehachse, um die sich das Förderrollenrohr drehen kann, wenn diese in einem entsprechenden Rahmengestell montiert sind.

Ferner ist innerhalb des Förderrollenrohrs 10 eine Antriebseinheit 20 mit einem Motor 21 und einem Getriebe 22 angeordnet. Der Motor 21 ist mit einem innerhalb des Förderrollenrohres angeordneten Antriebssteuerungsmodul 30 signaltechnisch verbunden. Das Antriebssteuerungsmodul 30 kann beispielsweise eine Motorelektronik umfassen, die zur Ansteuerung oder Kommutierung des Motors 21 dient. Das Antriebssteuerungsmodul 30 ist mittels einer Datenleitung mit einer außerhalb des Förderrollenrohres angeordneten Steuervorrichtung 60 signaltechnisch verbunden. Über die Datenleitung werden von der Steuervorrichtung 60 analoge Signale zur Steuerung des Motors 21 an das Antriebssteuerungsmodul 30 gesendet, beispielsweise ein 0-4v-Signal, in dessen Abhängigkeit die Motorelektronik des Antriebssteuerungsmoduls 30 die Drehzahl des Motors 21 steuert. Das Getriebe kann in unterschiedlicher Bauart ausgeführt sein und insbesondere auch entfallen, um einen Direktantrieb des Elektromotors auf den Rollenkörper zu realisieren.

Die elektronische Steuerungseinheit 30 umfasst weiterhin eine elektronische Speichereinheit 32, in der die Konfigurationsdaten abgespeichert werden können. Die elektronische Speichereinheit 32 umfasst insbesondere Konfigurationsdaten, die dauerhaft in der elektronischen Speichereinheit 32 abgelegt sind und beispielsweise eine Bauart der Förderrolle 100, des Motors 21, des Planetengetriebes 22 und/oder dergleichen umfassen.

Das erste Achselement 15 weist eine Bohrung 15a auf, die koaxial zur Drehachse verläuft. Hierdurch kann die Datenleitung 17 von außen in das Förderrollenrohr 10 hinein geführt werden.

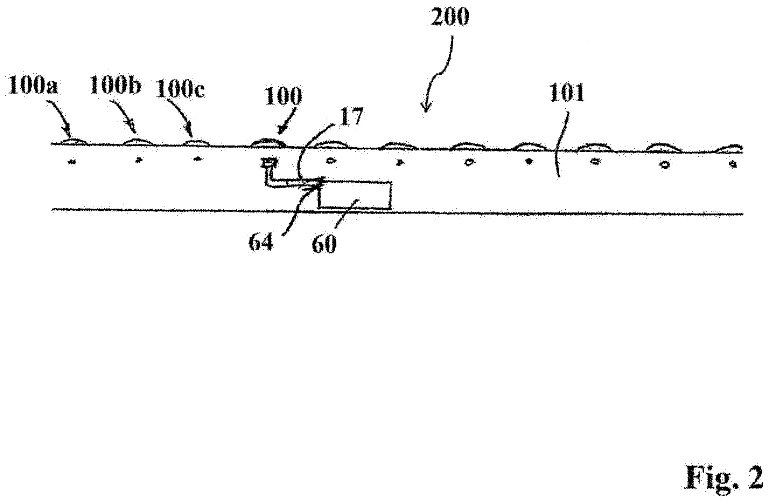

In Figur 2 ist ein Ausschnitt aus einer Förderstrecke 200 mit mehreren hintereinander angeordneten Förderrollen 100a, b, c und einer motorbetriebenen Förderrolle 100 abgebildet. Die motorbetriebene Förderrolle 100 ist mittels einer Datenleitung 17 mit einer Steuervorrichtung 60 verbunden. Die Steuervorrichtung 60 ist außerhalb des Förderrollenrohrs 10 angeordnet und an einem Rahmenelement eines Rahmengestells 101, in dem die Förderrolle 100 montiert ist, befestigt. Die Steuervorrichtung 60 weist eine Kommunikationsschnittstelle 64 auf, an denen die Datenleitung 17 angeschlossen ist.

Die Datenleitung 17 kann grundsätzlich dazu dienen, die Motorrolle mit der externen Steuervorrichtung 60 zu verbinden, um hierdurch für die Steuerung der Motorrolle notwendige Steuerungssignale, Stromversorgung oder dergleichen von außerhalb der Motorrolle zu realisieren und von außen zuzuführen. Die Datenleitung 17 kann weiterhin dazu dienen, um die Motorrolle mit einer Diagnoseeinrichtung in Form einer sogenannten Kommunikationsbox zu verbinden. Diese Kommunikationsbox dient dann dazu, um Daten aus der Motorrolle auszulesen. Es ist zu verstehen, dass die Kommunikationsbox auch in die externe Steuervorrichtung 60 integriert sein kann, welche dann sowohl Steuerungsaufgaben als auch Diagnoseaufgaben integriert hat und ausführen kann. Ebenso ist es möglich, dass eine für Diagnosezwecke ausgerüstete Kommunikationsbox als separate Einheit an die externe Steuervorrichtung 60 angeschlossen wird, um entsprechend Daten auszulesen. Weiterhin kann eine solche für Diagnosezwecke ausgerüstete Kommunikationsbox als separate Einheit anstatt der Steuervorrichtung 60 an die Motorrolle mittels der Datenleitung 17 angeschlossen werden.

Eine in der Steuerungseinheit 30 integrierte Motorelektronik ist der Antriebseinheit 20 zugeordnet und mit dem Motor 21 signaltechnisch verbunden. Durch Zusammenwirken von Drehgebern am Motor 21 und der Motorelektronik 30 können Wicklungen des Motors 21 aus der Motorelektronik entsprechend mit Spannung beaufschlagt werden, um eine gewünschte Drehzahl und ein gewünschtes Drehmoment zu erzeugen. So kann eine elektronische Kommutierung innerhalb der Rolle realisiert sein. Die Motorelektronik empfängt im Betriebsmodus der Motorrolle analoge Steuerungsdaten über die Datenleitung 17.

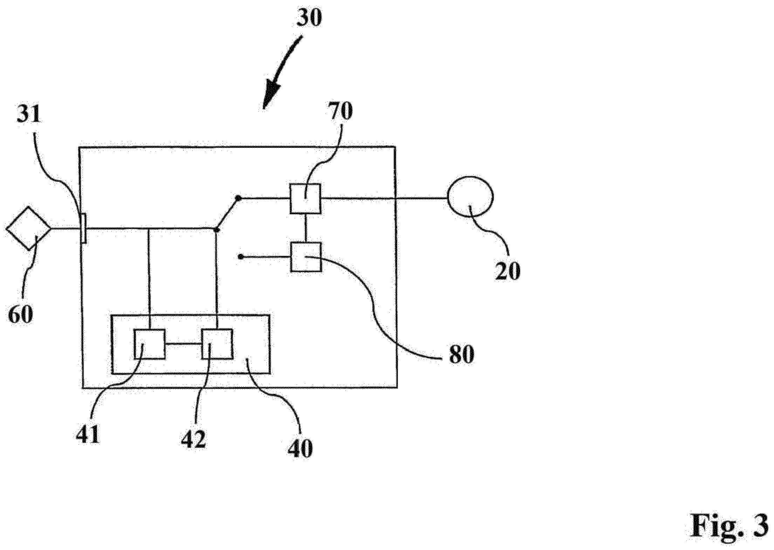

Bezugnehmend auf Figur 3 umfasst die Steuerungseinheit 30 eine Anschlussschnittstelle 31, die mittels der Datenleitung 17 zum Austausch von Daten mit der Steuerschaltung 60 oder einer Kommunikationsbox 90 oder einer über eine Steuerschaltung 60 angeschlossenen Kommunikationsbox 90 ausgebildet ist. Solche Daten können einerseits analoge Steuerungsdaten zum Steuern der Drehzahl und Drehrichtung des Motors 21 sein. Solche Daten können weiterhin Konfigurationsdaten sein, welche Informationen über Eigenschaften der Motorrolle beinhalten. So können als Konfigurationsdaten beispielsweise mechanische Betriebsdaten, thermische Betriebsdaten und/oder zeitliche Betriebsdaten übermittelt werden, die also sich zeitlich verändernde, im Betrieb auftretende Zustände beschreiben. Konfigurationsdaten können auch unveränderbare Informationen über die Motorrolle sein, die beispielsweise eine Bauweise des Getriebes oder des Motors beschreiben, eine Information über die Untersetzung des Getriebes, eine Seriennummer der Motorrolle oder dergleichen enthalten.

Die Steuerungseinheit 30 weist ein Umschaltmodul 40 auf. Dieses Umschaltmodul 40 ist ausgebildet, um einen über die Datenleitung 17 empfangenen Umschaltbefehl zu erkennen, und ein Umschalten zwischen zwei unterschiedlichen Zuständen der Steuerungseinheit 30 der Motorrolle zu bewirken. In einem ersten Zustand, dem Betriebszustand, ist die Steuerungseinheit ausgebildet, um über die Datenleitung analoge Steuerungssignale zu empfangen und die Motorelektronik verarbeitet diese analogen Steuerungssignale, um hiermit den Motor für eine bestimmte Drehzahl anzusteuern. In einem zweiten Zustand, dem Diagnosezustand ist die Steuerungseinheit ausgebildet, um Konfigurationsdaten zu senden oder zu empfangen, wie zuvor beschrieben. Das Umschaltmodul 40 weist zum Zwecke des Umschaltens zwischen dem Betriebszustand und dem Diagnosezustand ein Detektormodul 41 auf. Das Detektormodul 41 ist ausgebildet, um ein analoges Steuerungssignal und/oder eine bestimmte Abfolge analoger Steuerungssignale als Umschaltbefehl zu erkennen. So kann beispielsweise ein bestimmter Analogwert des Steuerungssignals, der im normalen Betriebszustand als Steuerungssignal nicht verwendet wird, dazu genutzt werden, um einen Umschaltbefehl zu senden. Beispielsweise könnte die analoge Drehzahlsteuerung in einem Bereich von -4 bis +4 Volt als Steuerungssignal arbeiten und ein Analogsignalwert von +5 Volt einen Umschaltbefehl von dem Betriebszustand in den Diagnosezustand bewirken. Ebenso könnte eine kurze Abfolge von analogen Drehrichtungsumkehrsignalen, beispielsweise vor-zurück-vor-zurück-vor-zurück-vor-zurück (=+2V, -2V, +2V, -2V, +2V, -2V, +2V, -2V) die innerhalb Sekunde empfangen wird, als Umschaltbefehl von dem Detektormodul interpretiert werden.

Das Detektormodul 41 steuert bei Empfang eines Umschaltbefehls ein Schaltmodul 42 an, welches von dem analogen Betriebszustand in den digitalen Diagnoserzustand umschaltet.

In dem digitalen digitalen Diagnosezustand ist die Steuerungseinheit konfiguriert, um über die Datenleitung digital Datensignale zu senden. Grundsätzlich kann im Diagnosezustand ein Versenden von Daten, welche Betriebsdaten oder Konfigurationsdaten beinhalten, mittels analoger Signale über die Datenleitung 17 erfolgen, beispielsweise, in dem die Kommunikationsbox ausgebildet ist, um solche analogen Signale entsprechend zu interpretieren und hieraus anhand von vorgespeicherten und vorbestimmten Vergleichswerten bestimmte Betriebszustände oder Konfigurationszustände abzulesen.

Grundsätzlich ist zu verstehen, dass an die Anschlussschnittstelle 31 der Steuerungseinheit 30 an eine externe Steuervorrichtung 60 angeschlossen sein kann, wie in Figur 3 abgebildet. Die externe Steuervorrichtung 60 kann eine Kommunikationsbox umfassen, um hierdurch die Auslesevorgänge in dem digitalen Diagnosezustand auszuführen. An die Steuervorrichtung 60 kann auch eine Kommunikationsbox 90 angeschlossen werden, um über die Steuervorrichtung 60 die Konfigurations- und Auslesevorgänge im Diagnosezustand auszuführen.

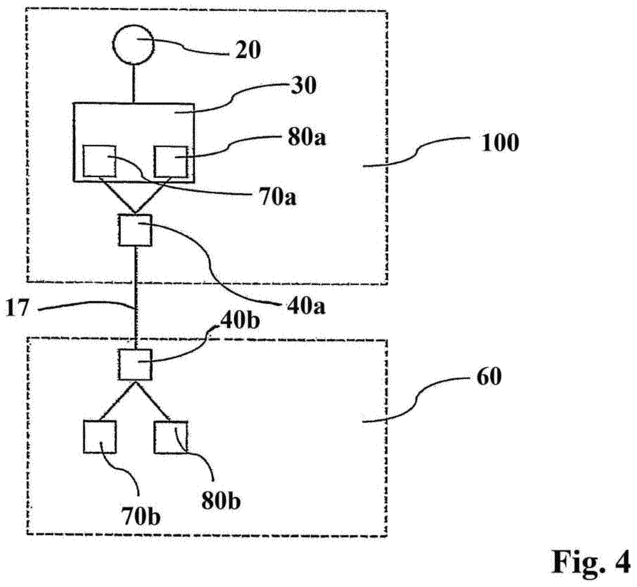

Figur 4 zeigt schematisch eine Darstellung einer erfindungsgemäßen Motorrolle 100 im Anschluss an eine Steuervorrichtung 60 mit integrierter Kommunikationsbox für den Austausch von Konfigurationsdaten. Die Motorrolle 100 umfasst die Antriebseinheit 20, welche mit der Steuerungseinheit 30 signaltechnisch verbunden ist. Die Steuerungseinheit 30 ist über eine Datenleitung 17 mit der Kommunikationsbox 60 verbunden. Auf Seiten der Motorrolle 100 ist eine Umschaltvorrichtung 40a zum Umschalten zwischen Betriebszustand und Diagnosezustand integraler Bestandteil der Steuerungseinheit 30 am dortigen Ende der Datenleitung 17. Auf Seiten der Steuervorrichtung mit Steuervorrichtung 60 ist ein Signalumschalter 40b zum Umschalten zwischen dem analogen Betriebszustand und dem digitalen Diagnoserzustand an dem dortigen Ende der Datenleitung 17 vorgesehen. Über diese Umschaltvorrichtung 40a und Signalumschalter 40b ist die Steuerungseinheit 30 über die Datenleitung mit der Steuervorrichtung verbunden.

In der Betriebszustandsschaltung kann die Motorelektronik in dem Antriebssteuerungsmodul 30 über die Datenleitung 17 Befehle von einem Analoganschluss 70b der Steuervorrichtung 60 in analoger Form an einem Analoganschluss 70a empfangen und Fehlersignale an die Kommunikationsbox in der Steuervorrichtung 60 in analoger Form von dem Analoganschluss 70a zu dem Analoganschluss 70b versenden.

In dem Diagnosezustand kann das Antriebssteuerungsmodul 30 Diagnose- und Betriebsdaten sowie Konfigurationsdaten von dem Digitalanschluss 80a an den Digitalanschluss 80b der Steuervorrichtung 60 senden.

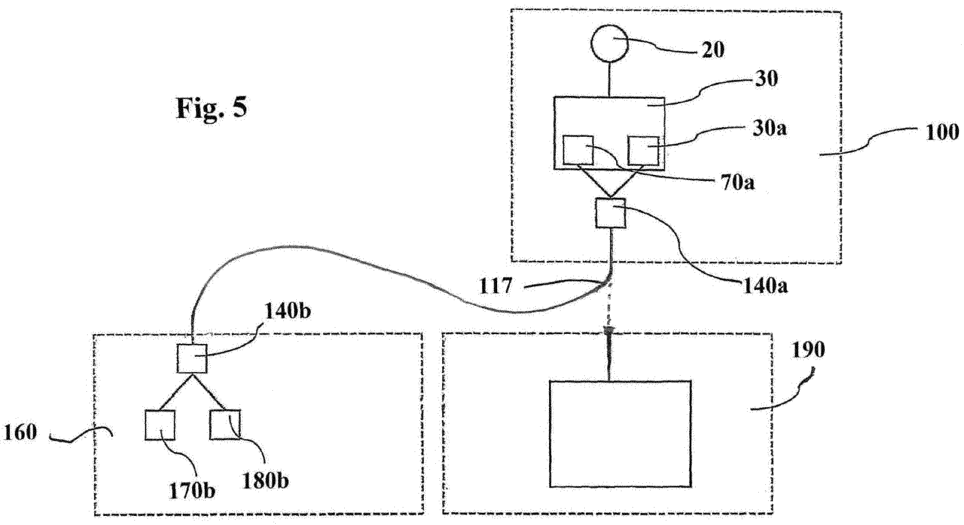

Fig. 5 zeigt eine Darstellung einer Kommunikationsbox, die anstelle einer Steuerungseinheit an die Motorrolle angeschlossen wird. Bei dieser Ausführungsform ist die Motorrolle 100 im Betriebsmodus an eine Steuerungseinheit 190 angeschlossen, kann aber stattdessen an eine Kommunikationsbox 160 angeschlossen werden, um Konfigurationsdaten aus der Motorrolle auszulesen. Die Kommunikationsbox 160 weist einen Analoganschluss 170b, einen Digitalanschluss 180b und einen Signalumschalter 140b auf. Analoganschluss 170b und Signalumschalter 140b dienen in diesem Anwendungsfall nur dazu, um ein analoges Umschaltsignal zu senden und danach auf eine Digitalkommunikation zum digitalen Empfang der Konfigurationsdaten umzuschalten, und um nach deren Empfang wieder in den Analogmodus umzuschalten.

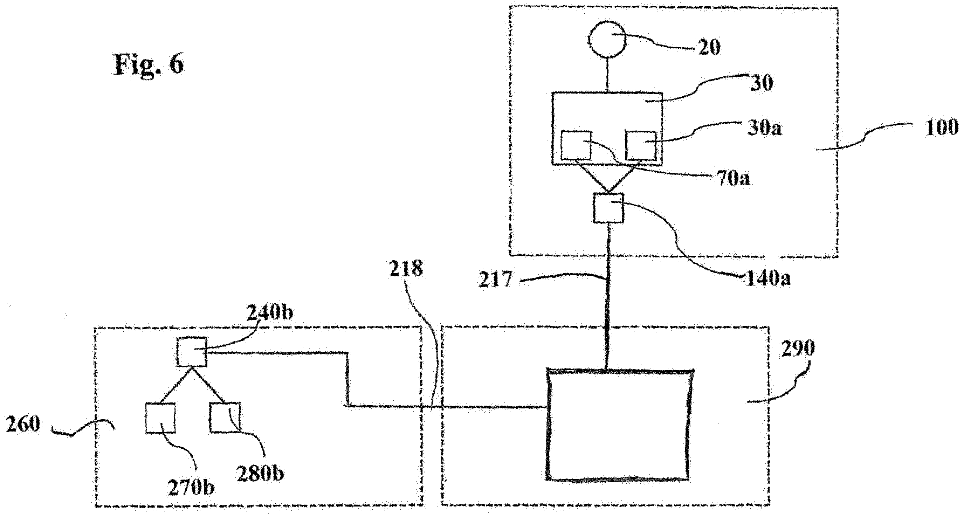

Fig. 6 zeigt eine Darstellung einer Kommunikationsbox, die über eine Steuerungseinheit an die Motorrolle angeschlossen wird. Bei dieser Ausführungsform ist die Motorrolle 100 wie im ersten Ausführungsbeispiel gemäß Fig. 4 permanent an eine Steuerungseinheit 290 angeschlossen. An diese Steuerungseinheit 290 kann über einen Abfrageanschluss 218 eine Kommunikationsbox 260 angeschlossen werden, um Konfigurationsdaten aus der Motorrolle auszulesen. Die Kommunikationsbox 260 weist einen Analoganschluss 270b, einen Digitalanschluss 280b und einen Signalumschalter 240b auf. Analoganschluss 270b und Signalumschalter 240b dienen in diesem Anwendungsfall nur dazu, um ein analoges Umschaltsignal zu senden und danach auf eine Digitalkommunikation zum digitalen Empfang der Konfigurationsdaten umzuschalten, und um nach deren Empfang wieder in den Analogmodus umzuschalten.

### BEZUGSZEICHENLISTE

- 1: Fördervorrichtung
- 10: Förderrollenrohr
- 11: erstes Ende
- 12: zweites Ende
- 13,14: Endkappe
- 15: erstes Achselement
- 16: zweites Achselement
- 17: Datenleitung
- 20: Antriebseinheit (z. B. Motor+Getriebe)
- 21: Motor
- 22: Getriebe
- 30: Steuerungseinheit
- 31: Anschlussschnittstelle
- 40: Umschaltvorrichtung
- 40a: Umschaltvorrichtung A/D der Steuerungseinheit
- 40b: Signalumschalter A/D der Steuervorrichtung
- 41: Detektormodul
- 42: Schaltmodul
- 60: Steuervorrichtung
- 70a: Analoganschluss Steuerungseinheit
- 70b: Analoganschluss Steuervorrichtung
- 80a: Digitalanschluss Steuerungseinheit
- 80b: Digitalanschluss Steuervorrichtung
- 100: motorbetriebene Förderrolle
- 101: Rahmengestell
- 200: Förderstrecke

## Patentansprüche

1. Fördervorrichtung (1) mit einer Antriebseinheit (20), einer zur Analogsignalübertragung ausgebildeten Anschlussschnittstelle (31) und einem mit der Antriebseinheit (20) und der Anschlussschnittstelle (31) signaltechnisch gekoppelten Antriebssteuerungsmodul (30),
**dadurch gekennzeichnet,**
**dass** das Antriebssteuerungsmodul (30) ausgebildet ist, um
- in einem Betriebszustand über die Anschlussschnittstelle (31) analoge Steuerungssignale zu empfangen und die Antriebseinheit (20) in Abhängigkeit dieser Steuerungssignale zu steuern,
- in einem Digitalkommunikationszustand über die Anschlussschnittstelle (31) digitale Diagnosesignale auszugeben, und
- aus dem Betriebszustand in den Digitalkommunikationszustand bei Empfang eines Umschaltbefehls umzuschalten, wobei der Umschaltbefehl aus einem vorbestimmten analogen Steuerungssignal oder einer vorbestimmten Abfolge analoger Steuerungssignale besteht.

2. Fördervorrichtung (1) nach Anspruch 1,
**dadurch gekennzeichnet,**
**dass** das Antriebssteuerungsmodul (30) ausgebildet ist, um aus dem Digitalkommunikationszustand in den Betriebszustand bei Empfang eines Rückschaltbefehls umzuschalten, wobei der Rückschaltbefehl durch ein vorbestimmtes digitales Datensignal gebildet wird.

3. Fördervorrichtung (1) nach einem der vorhergehenden Ansprüche,
**dadurch gekennzeichnet,**
**dass** das Antriebssteuerungsmodul (30) ausgebildet ist, um den Umschaltbefehl als ein einziges analoges Steuerungssignal mit einem vorbestimmten Analogwert und/oder als eine vorbestimmte Abfolge von analogen Steuerungssignalen mit vorbestimmten übereinstimmenden Analogwerten oder mit vorbestimmten voneinander verschiedenen Analogwerten zu empfangen.

4. Fördervorrichtung (1) nach einem der vorhergehenden Ansprüche,
**dadurch gekennzeichnet,**
**dass** das Antriebssteuerungsmodul (31) ausgebildet ist, um im Digitalkommunikationszustand über den ersten Steuerungsdatenkontaktanschluss eine Abfolge von Konfigurationsdaten zu empfangen und/oder über den zweiten Steuerungsdatenkontaktanschluss eine Abfolge von Konfigurationsdaten zu senden.

5. Diagnoseeinrichtung (60) für eine Fördervorrichtung (1), insbesondere einer Fördervorrichtung nach einem der vorherigen Ansprüche, mit einer motorbetriebenen Förderrolle, umfassend eine elektronische Diagnoseeinheit mit einer Steuerungsdatenschnittstelle,
**dadurch gekennzeichnet,**
**dass** die elektronische Diagnoseeinheit ausgebildet ist, um
- einen analogen Umschaltbefehl an die Steuerungsdatenschnittstelle auszugeben,
- den analogen Umschaltbefehl als ein vorbestimmtes analoges Steuerungssignal oder als eine vorbestimmte Abfolge analoger Steuerungssignale über die Steuerungsdatenschnittstelle auszugeben, und
- nach Ausgabe des analogen Umschaltbefehls in einem Digitalkommunikationszustand einen Diagnosedatensatz über die Steuerungsdatenschnittstelle zu empfangen,
- den Diagnosedatensatz als eine Abfolge digitaler, binär kodierter Diagnosedaten zu empfangen.

6. Diagnoseeinrichtung (60) nach dem vorhergehenden Anspruch,
**dadurch gekennzeichnet,**
**dass** die elektronische Diagnoseeinheit ausgebildet ist, um von einer Benutzerschnittstelle einen Benutzerumschaltbefehl zu empfangen und um bei Empfang des Benutzerumschaltbefehls den analogen Umschaltbefehl an die Steuerungsdatenschnittstelle auszugeben.

7. Diagnoseeinrichtung (60) nach Anspruch 5 oder 6,
**dadurch gekennzeichnet,**
**dass** die elektronische Diagnoseeinheit ausgebildet ist, um den Umschaltbefehl als ein einziges analoges Steuerungssignal mit einem vorbestimmten Analogwert oder als eine vorbestimmte Abfolge von analogen Steuerungssignalen auszugeben.

8. Diagnoseeinrichtung (60) nach dem vorhergehenden Anspruch,
**dadurch gekennzeichnet,**
**dass** die Steuerungsdatenschnittstelle einen ersten Steuerungsdatenkontaktanschluss aufweist und die elektronische Diagnoseeinheit ausgebildet ist, um das einzige analoge Steuerungssignal mit einem vorbestimmten Analogwert oder als eine vorbestimmte Abfolge von analogen Steuerungssignalen über den ersten Steuerungsdatenkontaktanschluss auszugeben.

9. Diagnoseeinrichtung (60) nach einem der Ansprüche 5 bis 8,
**dadurch gekennzeichnet,**
**dass** die Steuerungsdatenschnittstelle einen ersten Steuerungsdatenkontaktanschluss und einen zweiten Steuerungsdatenkontaktanschluss umfasst
und die elektronische Diagnoseeinheit ausgebildet ist, um den Umschaltbefehl als ein erstes vorbestimmtes analoges Steuerungssignal an den ersten Steuerungsdatenkontaktanschluss und ein zweites vorbestimmtes analoges Steuerungssignal an den zweiten Steuerungsdatenkontaktanschluss auszugeben, wobei
- das erste und zweite vorbestimmte analoge Steuerungssignal zeitgleich ausgegeben wird, oder
- das erste und zweite vorbestimmte analoge Steuerungssignal in einem vorbestimmten Zeitabstand ausgegeben wird.

10. Diagnoseeinrichtung (60) nach einem der Ansprüche 5-9,
**dadurch gekennzeichnet,**
**dass** die Steuerungsdatenschnittstelle einen ersten Steuerungsdatenkontaktanschluss und einen zweiten Steuerungsdatenkontaktanschluss umfasst und die elektronische Diagnoseeinheit ausgebildet ist, um im Digitalkommunikationszustand über den ersten Steuerungsdatenkontaktanschluss digitale, binär kodierte Diagnoseauskunftsdaten zu empfangen und über den einen zweiten Steuerungsdatenkontaktanschluss digitale, binär kodierte Diagnoseabfragedaten zu senden.

11. Diagnoseeinrichtung (60) nach einem der Ansprüche 5 bis 10,
**dadurch gekennzeichnet,**
**dass** die elektronische Diagnoseeinheit
- in dem Betriebszustand ausgebildet ist, um analoge Steuerungsdaten an ein an die Steuerungsdatenschnittstelle angeschlossene analoges Antriebssteuerungsmodul einer Fördervorrichtung zu übermitteln, und
- den Umschaltbefehl in dem Betriebszustand an die Steuerungsdatenschnittstelle auszugeben, und
- nach Ausgabe des Umschaltbefehls aus dem Betriebszustand in den Digitalkommunikationszustand umzuschalten, in dem die elektronische Diagnoseeinheit zum Empfang des Diagnosedatensatzes über die Steuerungsdatenschnittstelle ausgebildet ist.

12. Diagnoseeinrichtung (60) nach einem der Ansprüche 5 bis 11,
**dadurch gekennzeichnet,**
**dass** die Diagnoseschnittstelle eine graphische Benutzerschnittstelle ist, die ausgebildet ist, um die Diagnosedaten einem Benutzer anzuzeigen.

13. Fördersystem umfassend eine Diagnosevorrichtung (60) nach einem der vorhergehenden Ansprüche 5 bis 12 und eine Fördervorrichtung (1) nach einem der vorhergehenden Ansprüche 1 bis 4, wobei die Steuerungsschnittstelle mit der Anschlussschnittstelle verbunden ist
- zur Analogdatenübertragung in dem Betriebszustand, und
- zur Übertragung digitaler, binär kodierter Konfigurationsdaten in dem Digitalkommunikationszustand.

14. Verfahren zum Ausgeben von Konfigurationsdaten aus einer analog gesteuerten Fördervorrichtung (1), mit den Schritten:
- Empfangen eines Umschaltbefehls als ein vorbestimmtes analoges Steuerungssignal oder eine vorbestimmte Abfolge von analogen Steuerungssignalen in einem Antriebssteuerungsmodul,
- in Reaktion auf den Empfang des Umschaltbefehls Umschalten des Antriebssteuerungsmoduls aus einem Betriebszustand, in dem das Antriebssteuerungsmodul zum Empfang von analogen Steuerungssignalen und zur Steuerung einer Antriebseinheit in Abhängigkeit der analogen Steuerungssignale geschaltet ist, in einen Digitalkommunikationszustand, in dem das Antriebssteuerungsmodul zum Senden und Empfangen von Konfigurationsdaten geschaltet ist,
- Kodieren von permanenten oder nicht permanenten Eigenschaftsinformationen der Fördervorrichtung in dem Antriebssteuerungsmodul in eine Abfolge von digitalen, binär kodierten Konfigurationsdaten, und
- Senden der Abfolge von digitalen, binär kodierten Konfigurationsdaten über eine Anschlussschnittstelle des Antriebssteuerungsmoduls.

15. Verfahren zum Auslesen von Konfigurationsdaten einer analog gesteuerten Fördervorrichtung (1), insbesondere einer Fördervorrichtung nach einem der Ansprüche 1 bis 4, mit den Schritten:
- Senden eines Umschaltbefehls als ein vorbestimmtes analoges Steuerungssignal oder eine vorbestimmte Abfolge von analogen Steuerungssignalen aus einer elektronischen Diagnoseeinheit (60),
- Umschalten der elektronischen Diagnoseeinheit (60) aus einem Betriebszustand, in dem die elektronische Diagnoseeinheit zum Senden von analogen Steuerungssignalen geschaltet ist, in einen Digitalkommunikationszustand, in dem die elektronische Diagnoseeinheit (60) zum Senden und Empfangen von Konfigurationsdaten geschaltet ist
- Empfangen einer Abfolge von digitalen, binär kodierten Konfigurationsdaten,
- Dekodieren der Abfolge von digitalen, binär kodierten Konfigurationsdaten zu Diagnoseinformationen und
- Ausgeben der Diagnoseinformationen über eine Kommunikationsschnittstelle (64).

## Claims

1. A conveyor apparatus (1) comprising a drive unit (20), a connection interface (31) configured for analog signal transmission, and a drive control module (30) which is coupled to the drive unit (20) and the connection interface (31) via signal technology, **characterized in that** the drive control module (30) is configured:
- to receive analog control signals via the connection interface (31) in an operating state and to control the drive unit (20) as a function of these control signals,
- to output digital diagnostic signals via the connection interface (31) in a digital communication state, and
- to switch from the operating state to the digital communication state upon receipt of a switchover command, wherein the switchover command is made up of a predetermined analog control signal or a predetermined sequence of analog control signals.

2. The conveyor apparatus (1) as claimed in claim 1, **characterized in that** the drive control module (30) is configured to switch from the digital communication state to the operating state upon receipt of a switchback command, wherein the switchback command is formed by a predetermined digital data signal.

3. The conveyor apparatus (1) as claimed in one of the preceding claims, **characterized in that** the drive control module (30) is configured to receive the switchover command as a single analog control signal having a predetermined analog value, and/or as a predetermined sequence of analog control signals having predetermined matching analog values or having predetermined analog values which are different from one another.

4. The conveyor apparatus (1) as claimed in one of the preceding claims, **characterized in that** the drive control module (30) is configured, in the digital communication state, to receive a sequence of configuration data via the first control data contact terminal, and/or to transmit a sequence of configuration data via the second control data contact terminal.

5. A diagnostic device (60) for a conveyor apparatus (1), in particular a conveyor apparatus as claimed in one of the preceding claims, having a motor-operated conveyor roller, comprising an electronic diagnostic unit having a control data interface,
**characterized in that** the electronic diagnostic unit is configured to
- output an analog switchover command to the control data interface,
- to output the analog switchover command via the control data interface as a predetermined analog control signal or as a predetermined sequence of analog control signals,
- after outputting the analog switchover command, to receive a diagnostic data record via the control data interface in a digital communication state,
- to receive the diagnostic data record as a sequence of digital, binary-encoded diagnostic data.

6. The diagnostic device (60) as claimed the preceding claim, **characterized in that** the electronic diagnostic unit is configured to receive a user switchover command from a user interface and to output the analog switchover command to the control data interface upon receipt of the user switchover command.

7. The diagnostic device (60) as claimed in claim 5 or 6, **characterized in that** the electronic diagnostic unit is configured to output the switchover command as a single analog control signal having a predetermined analog value, or as a predetermined sequence of analog control signals.

8. The diagnostic device (60) as claimed in the preceding claim , **characterized in that** the control data interface comprises a first control data contact terminal, and the electronic diagnostic unit is configured to output the single analog control signal having a predetermined analog value or as a predetermined sequence of analog control signals, via the first control data contact terminal.

9. The diagnostic device (60) as claimed in one of claims 5 to 8, **characterized in that** the control data interface comprises a first control data contact terminal and a second control data contact terminal, and the electronic diagnostic unit is configured to output the switchover command as a first predetermined analog control signal to the first control data contact terminal and as a second predetermined analog control signal to the second control data contact terminal, wherein
- the first and second predetermined analog control signals are output simultaneously, or
- the first and second predetermined analog control signals are output at a predetermined time interval.

10. The diagnostic device (60) as claimed in one of claims 5 to 9, **characterized in that**, in the digital communication state, the control data interface comprises a first control data contact terminal and a second control data contact terminal, and the electronic diagnostic unit is configured to receive digital, binary-encoded diagnostic information data via the first control data contact terminal and to transmit digital, binary-encoded diagnostic query data via the one second control data contact terminal.

11. The diagnostic device (60) as claimed in one of claims 5 to 10, **characterized in that**, in the operating state, the electronic diagnostic unit
- is configured to transmit analog control data to an analog drive control module of a conveyor apparatus which is connected to the control data interface, and to output the switchover command to the control data interface in the operating state, and
- after outputting the switchover command, to switch from the operating state to the digital communication state, in which the electronic diagnostic unit is configured to receive the diagnostic data record via the control data interface.

12. The diagnostic device (60) as claimed in one of claims 5 to 11, **characterized in that** the diagnosis interface is a graphical user interface which is configured to display the diagnostic data to a user.

13. A conveyance system comprising a diagnostic device (60) as claimed in one of the preceding claims 5 to 12, and a conveyor apparatus (1) as claimed in one of the preceding claims 1 to 4, wherein the control interface is connected to the connection interface
- for analog data transmission in the operating state, and
- for digital, binary-encoded configuration data in the digital communication state.

14. A method for outputting configuration data from an analog-controlled conveyor apparatus (1), comprising the steps of:
- receiving a switchover command as a predetermined analog control signal or a predetermined sequence of analog control signals in a drive control module,
- in response to the receipt of the switchover command, switching the drive control module from an operating state in which the drive control module is connected for receiving analog control signals and for controlling a drive unit as a function of the analog control signals, to a digital communication state in which the drive control module is connected for transmitting and receiving configuration data,
- encoding permanent or non-permanent characteristic information about the conveyor apparatus in the drive control module in a sequence of digital, binary-encoded configuration data, and
- transmitting the sequence of digital, binary-encoded configuration data via a connection interface of the d1ive control module.

15. A method for reading out configuration data of an analog-controlled conveyor apparatus (1), in particular a conveyor apparatus as claimed in one of claims 1 to 4, comprising the steps of:
- transmitting a switchover command from an electronic diagnostic unit (60) as a predetermined analog control signal or a predetermined sequence of analog control signals,
- switching the electronic diagnostic unit (60) from an operating state in which the electronic diagnostic unit is connected for transmitting analog control signals, to a digital communication state in which the electronic diagnostic unit (60) is connected for transmitting and receiving configuration data,
- receiving a sequence of digital, binary-encoded configuration data,
- decoding the sequence of digital, binary-encoded configuration data into diagnostic information, and
- outputting the diagnostic information (64) via a communication interface.

## Revendications

1. Dispositif de transport (1) équipé d'une unité d'entraînement (20), d'une interface de raccordement (31) réalisée pour la transmission de signal analogique et d'un module de commande d'entraînement (30) couplé, par le biais de la technologie du signal, à l'unité d'entraînement (20) et à l'interface de raccordement (31) ;
**caractérisé en ce que** :
le module de commande d'entraînement (30) est réalisé pour :
- recevoir, dans un état de fonctionnement, des signaux de commande analogiques via l'interface de raccordement (31) et pour commander l'unité d'entraînement (20) en fonction de ces signaux de commande ;
- émettre, dans un état de communication numérique, des signaux de diagnostic numériques via l'interface de raccordement (31) ; et
- basculer de l'état de fonctionnement dans l'état de communication numérique à réception d'un ordre de commutation, l'ordre de commutation se composant d'un signal de commande analogique prédéterminé ou d'une séquence prédéterminée de signaux de commande analogiques.

2. Dispositif de transport (1) selon la revendication 1,
**caractérisé en ce que** :
le module de commande d'entraînement (30) est réalisé pour basculer de l'état de communication numérique dans l'état de fonctionnement à réception d'un ordre de rétrogradation, l'ordre de rétrogradation étant formé par un signal de données numérique prédéterminé.

3. Dispositif de transport (1) selon l'une quelconque des revendications précédentes,
**caractérisé en ce que** :
le module de commande d'entraînement (30) est réalisé pour recevoir l'ordre de commutation sous la forme d'un signal de commande analogique unique avec une valeur analogique prédéterminée et/ou sous la forme d'une séquence prédéterminée de signaux de commande analogiques avec des valeurs analogiques correspondantes prédéterminées ou avec des valeurs analogiques différentes les unes des autres prédéterminées.

4. Dispositif de transport (1) selon l'une quelconque des revendications précédentes,
**caractérisé en ce que** :
le module de commande d'entraînement (31) est réalisé pour recevoir, dans l'état de communication numérique, une séquence de données de configuration via la première borne de contact de données de commande et/ou pour envoyer une séquence de données de configuration via la deuxième borne de contact de données de commande.

5. Dispositif de diagnostic (60) pour un dispositif de transport (1), notamment un dispositif de transport selon l'une quelconque des revendications précédentes, avec un rouleau de transport entraîné par moteur, comprenant une unité de diagnostic électronique avec une interface de données de commande ;
**caractérisé en ce que** :
l'unité de diagnostic électronique est réalisée pour :
- émettre un ordre de commutation analogique à l'interface de données de commande ;
- émettre l'ordre de commutation analogique sous la forme d'un signal de commande analogique prédéterminé ou sous la forme d'une séquence prédéterminée de signaux de commande analogiques via l'interface de données de commande ; et
- recevoir, après émission de l'ordre de commutation analogique dans un état de communication numérique, un jeu de données de diagnostic via l'interface de données de commande ;
- recevoir le jeu de données de diagnostic sous la forme d'une séquence numérique de données de diagnostic codées de façon binaire.

6. Dispositif de diagnostic (60) selon la revendication précédente, **caractérisé en ce que** :
l'unité de diagnostic électronique est réalisée pour recevoir un ordre de commutation d'utilisateur depuis une interface d'utilisateur et pour émettre, à réception de l'ordre de commutation d'utilisateur, l'ordre de commutation analogique à l'interface de données de commande.

7. Dispositif de diagnostic (60) selon la revendication 5 ou 6,
**caractérisé en ce que** :
l'unité de diagnostic électronique est réalisée pour émettre l'ordre de commutation sous la forme d'un signal de commande analogique unique avec une valeur analogique prédéterminée ou sous la forme d'une séquence prédéterminée de signaux de commande analogiques.

8. Dispositif de diagnostic (60) selon la revendication précédente, **caractérisé en ce que** :
l'interface de données de commande comporte une première borne de contact de données de commande et l'unité de diagnostic électronique est réalisée pour émettre l'unique signal de commande analogique avec une valeur analogique prédéterminée ou sous la forme d'une séquence prédéterminée de signaux de commande analogiques via la première borne de contact de données de commande.

9. Dispositif de diagnostic (60) selon l'une quelconque des revendications 5 à 8,
**caractérisé en ce que** :
l'interface de données de commande comprend une première borne de contact de données de commande et une deuxième borne de contact de données de commande ; et
l'unité de diagnostic électronique est réalisée pour émettre l'ordre de commutation sous la forme d'un premier signal de commande analogique prédéterminé au niveau d'une première borne de contact de données de commande et un deuxième signal de commande analogique prédéterminé au niveau d'une deuxième borne de contact de données de commande ;
- le premier et deuxième signal de commande analogique prédéterminé étant émis de façon isochrone ; ou
- le premier et deuxième signal de commande analogique prédéterminé est émis à des intervalles de temps prédéterminés.

10. Dispositif de diagnostic (60) selon l'une quelconque des revendications 5 à 9,
**caractérisé en ce que** :
l'interface de données de commande comprend une première borne de contact de données de commande et une deuxième borne de contact de données de commande et l'unité de diagnostic électronique est réalisée pour recevoir, dans l'état de communication numérique, via la première borne de contact de données de commande, des données de renseignement de diagnostic codées de façon binaire numérique et émettre des données d'interrogation de diagnostic codées de façon binaire via la deuxième borne de contact de données de commande numérique.

11. Dispositif de diagnostic (60) selon l'une quelconque des revendications 5 à 10,
**caractérisé en ce que** :
l'unité de diagnostic électronique est réalisée :
- pour transmettre, dans l'état de fonctionnement, des données de commande analogiques à un module de commande d'entraînement, raccordé à l'interface de données de commande, d'un dispositif de transport ; et
- pour émettre l'ordre de commutation dans l'état de fonctionnement au niveau de l'interface de données de commande ; et
- pour commuter, après émission de l'ordre de commutation de l'état de fonctionnement dans l'état de communication numérique, dans lequel l'unité de diagnostic électronique est réalisée pour recevoir le jeu de données de diagnostic via l'interface de données de commande.

12. Dispositif de diagnostic (60) selon l'une quelconque des revendications 5 à 11,
**caractérisé en ce que** :
l'interface de diagnostic est une interface d'utilisateur graphique qui est réalisée pour afficher les données de diagnostic à un utilisateur.

13. Système de transport comprenant un dispositif de diagnostic (60) selon l'une quelconque des revendications précédentes 5 à 12 et un dispositif de transport (1) selon l'une quelconque des revendications précédentes 1 à 4, l'interface de commande étant reliée à l'interface de raccordement ;
- pour la transmission analogique de données dans l'état de fonctionnement ; et
- pour la transmission numérique de données de configuration codées de façon binaire dans l'état de communication numérique.

14. Procédé d'émission de données de configuration à partir d'un dispositif de transport (1) commandé de façon analogique, avec les étapes suivantes :
- réception d'un ordre de commutation sous la forme d'un signal de commande analogique prédéterminé ou d'une séquence prédéterminée de signaux de commande analogiques dans un module de commande d'entraînement ;
- en réaction à la réception de l'ordre de commutation, commutation du module de commande d'entraînement d'un état de fonctionnement dans lequel le module de commande d'entraînement est connecté pour recevoir des signaux de commande analogiques et pour commander une unité d'entraînement en fonction des signaux de commande analogiques, dans un état de communication numérique dans lequel le module de commande d'entraînement est connecté pour envoyer et recevoir des données de configuration ;
- codage d'informations de propriété permanentes ou non permanentes du dispositif de transport dans le module de commande d'entraînement dans une séquence de données de configuration numériques codées de façon binaire ; et
- émission de la séquence de données de configuration numériques codées de façon binaire via une interface de raccordement du module de commande d'entraînement.

15. Procédé de lecture de données de configuration d'un dispositif de transport (1) à commande analogique, notamment d'un dispositif de transport selon l'une quelconque des revendications 1 à 4, avec les étapes suivantes :
- émission d'un ordre de commutation sous la forme d'un signal de commande analogique prédéterminé ou d'une séquence prédéterminée de signaux de commande analogiques à partir d'une unité de diagnostic électronique (60) ;
- commutation de l'unité de diagnostic électronique (60) d'un état de fonctionnement dans lequel l'unité de diagnostic électronique est connectée pour envoyer des signaux de commande analogiques, dans un état de communication numérique dans lequel l'unité de diagnostic électronique (60) est connectée pour envoyer et recevoir des données de configuration ;
- réception d'une séquence de données de configuration numériques codées de façon binaire ;
- décodage de la séquence de données de configuration numériques codées de façon binaire ; et
- émission des informations de diagnostic sur une interface de communication (64).
